# EUROPEAN PATENT SPECIFICATION

(11) **EP 4 008 438 B1**
(45) Date of publication and mention of the grant of the patent: **04.09.2024**
(21) Application number: 21203903.6
(22) Date of filing: 21.10.2021
(51) Int. Cl.: B04B 7/00

(54) **CENTRIFUGE DEVICE AND LOCK MODULE**
ZENTRIFUGENVORRICHTUNG UND SCHLIESSMODUL
DISPOSITIF DE CENTRIFUGEUSE ET MODULE DE VERROUILLAGE

(30) Priority: 04.12.2020 US 202063121242 P; 20.04.2021 TW 110114180
(43) Date of publication of application: 08.06.2022
(73) Proprietor: Sangtech Lab Inc., Taipei (TW)
(72) Inventor: LIANG, Cheng-Sheng, Taipei (TW); LIANG, Tao, Taipei (TW); KE, Hsin Tai, Taipei (TW)
(74) Representative: Becker, Eberhard

(56) References cited:
- EP-A1- 0 657 221
- WO-A1-88/05691
- US-A- 3 581 981
- US-A- 4 140 268

## Description

### BACKGROUND

### Technical Field

The disclosure relates to a centrifuge device and a lock module, and particularly relates to a centrifuge device and a lock module that may be used for biological analysis.

### Description of Related Art

Biochemical testing of blood or other specimens usually requires rapid quantitative distribution of liquids to execute different tests. Biochemical testing usually also requires separation of cell bodies and body fluids that may affect each other before testing. The quantitative distribution and separation steps are usually achieved by centrifugation steps. The centrifugation step uses the centrifugal force generated by the centrifuge device to separate mixtures with various components and gravitational force.

Generally speaking, the centrifuge device must lock the stator of the centrifugal bowl and drive the rotor of the centrifugal bowl to rotate, so as to perform the centrifugation step on blood or other samples in the centrifugal bowl. In the current centrifuge device, the stator of the centrifugal bowl is generally locked by the lock mechanism with complicated structure and complex operation steps, such that it is difficult for the user to quickly lock and release the stator with one hand. On the other hand, in addition to the lock mechanism, the centrifuge device also requires an additional sensor and a corresponding circuit to detect whether the centrifugal bowl is leaking and/or to sense the height of liquid in the centrifugal bowl. Therefore, it is difficult to reduce the overall volume of the centrifuge device, so the requirement of portability cannot be met.

Patent literature EP 0657221 A1 relates to an apparatus for gripping a centrifuge bowl including a single pivoting retaining arm having a stationary jaw. The retaining arm is capable of pivoting into and out of position such that the centrifuge bowl can be loaded and unloaded. A moveable jaw pivots about the retaining arm to lock the stem of the centrifuge bowl against the stationary jaw when actuated by a latching mechanism.

Patent literature US 3581981 A relates to a novel chuck for holding centrifuge rotors and particularly to a chuck which can be easily operated in connection with plastic or metal centrifuge rotors and to a centrifuge assembly incorporating the chuck.

Patent literature WO 88/05691 A1 relates to the field of blood component separation and collection, more particularly to the collection of platelets or plasma from volunteer donors at temporary sites, remote from medical facilities, with portable lightweight equipment capable of easy transport.

### SUMMARY

The invention is set out in the appended set of claims. The following disclosure serves a better understanding of the present invention. According to the disclosure, a lock module adapted to a centrifuge device is provided. The centrifuge device has a relatively small volume and the operation of the lock module is relatively simple.

The lock module of the disclosure is adapted to a centrifuge device. The centrifuge device comprises a base and a rotation platform. The rotation platform is disposed on the base and is adapted to support a rotor of a centrifugal bowl. The rotor is rotatably connected to a stator of the centrifugal bowl. The lock module comprising a main body disposed on the base a lock assembly, and a positioning component. The main body is disposed on the base. The lock assembly is movably connected to the main body and is located above the rotation platform. The lock assembly is adapted to be operated to a first state relative to the main body to lock the stator. The lock assembly is adapted to be operated to a second state relative to the main body to be separated from the stator. The positioning component is movably connected to the main body. The positioning component is adapted to move to a first position relative to the main body to position the lock assembly to the first state. The positioning component is adapted to move to a second position relative to the main body to release the lock assembly. Wherein the lock module is characterised in that the lock assembly has a positioning hole and a sliding groove connected to each other. The positioning component includes a positioning section and a non-positioning section. An outer diameter of the positioning section is greater than a width of the sliding groove. An outer diameter of the non-positioning section is less than the width of the sliding groove. When the lock assembly is in the first state and the positioning component is at the first position, the positioning component penetrates the positioning hole and at least part of the positioning section is located in the positioning hole to position the lock assembly. When the positioning component moves to the second position along an axial direction of the positioning hole for the positioning section to move apart from the positioning hole, the non-positioning section located in the positioning hole is adapted to move to the sliding groove relative to the lock assembly.

In an embodiment of the disclosure, the lock assembly has a notch and is adapted to lock the stator by the notch. An inner edge of the notch is non-circular.

In an embodiment of the disclosure, the lock assembly has a pivot portion and a force receiving portion. The pivot portion and the force receiving portion are respectively located at two opposite ends of the lock assembly. The pivot portion is pivotally connected to the main body. The force receiving portion is adapted to receive a force, so that the lock assembly rotates between the first state and the second state relative to the main body.

In an embodiment of the disclosure, the lock assembly is pivotally connected to the main body along a first rotational axis. The rotation platform is adapted to rotate along a second rotational axis. The first rotational axis is parallel to the second rotational axis.

In an embodiment of the disclosure, the lock module includes an elastic component connected between the main body and the positioning component. The positioning component is adapted to resist an elastic force of the elastic component to move from the first position to the second position. The positioning component is adapted to return from the second position to the first position by the elastic force of the elastic component.

In an embodiment of the disclosure, the lock module includes at least one leakage sensor. The at least one leakage sensor is disposed in the main body and faces the centrifugal bowl on the rotation platform.

In an embodiment of the disclosure, the lock module includes at least one signal line. The at least one signal line is at least partially disposed in the main body and is connected to the at least one leakage sensor.

In an embodiment of the disclosure, the lock module includes an optical sensing assembly. The optical sensing assembly is disposed in the main body and is adapted to sense a liquid level of liquid in the centrifugal bowl on the rotation platform.

In an embodiment of the disclosure, the optical sensing assembly includes a lens and an optical fiber line. The lens is disposed in the main body and faces the centrifugal bowl on the rotation platform. The optical fiber line is at least partially disposed in the main body and is connected to lens.

Based on the above, the lock module of the disclosure locks the stator of the centrifugal bowl by the operation of the single lock assembly, and positions and releases the lock assembly by the operation of the single positioning component, and the lock assembly and the positioning component are disposed in the same main body, so the user may easily operate the lock assembly and the positioning component with one hand. In addition, since the lock module of the disclosure is a single module composed of the simple parts as described above, the required configuration space is relatively small, so that the overall volume of the centrifuge device may be effectively reduced.

### BRIEF DESCRIPTION OF THE DRAWINGS

FIG. 1 is a perspective view of a centrifuge device according to an embodiment of the disclosure.
FIG. 2 illustrates a lock assembly of FIG. 1 locking a stator of a centrifugal bowl.
FIG. 3 illustrates the lock assembly of FIG. 1 separated from the stator of the centrifugal bowl.
FIG. 4 is a perspective view of a lock module of FIG. 1.
FIG. 5 is a perspective view of a partial structure of the lock module of FIG. 4.
FIG. 6A to FIG. 6C illustrate an operation process of a positioning component of FIG. 5.
FIG. 7 is a top view of a partial structure of the positioning component and the lock assembly of FIG. 6A.
FIG. 8 is a top view of the partial structure of the positioning component and the lock assembly of FIG. 6C.

### DETAILED DESCRIPTION OF DISCLOSED EMBODIMENTS

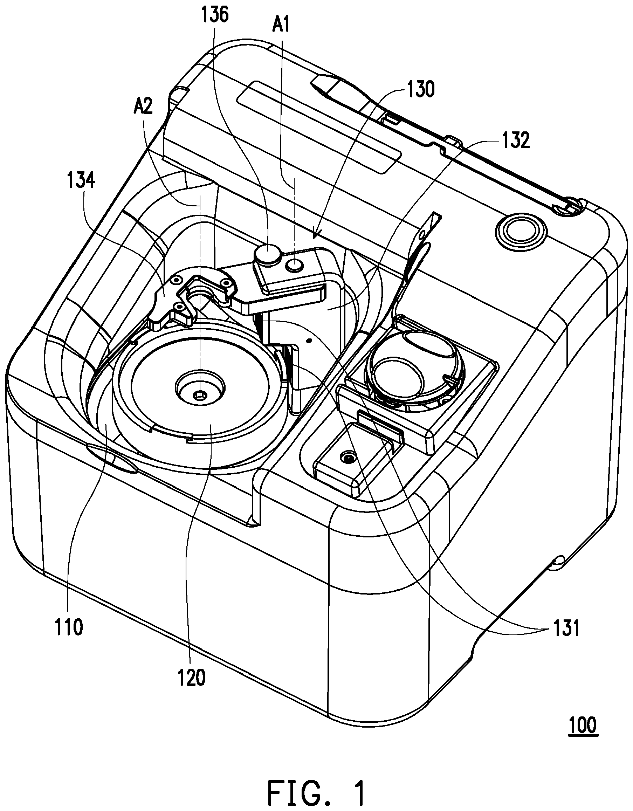

FIG. 1 is a perspective view of a centrifuge device according to an embodiment of the disclosure. Please refer to FIG. 1. A centrifuge device 100 of this embodiment includes a base 110, a rotation platform 120, and a lock module 130. The rotation platform 120 is disposed on the base 110. The lock module 130 includes a main body 132, a lock assembly 134, and a positioning component 136. The main body 132 is disposed on the base 110. The lock assembly 134 is movably connected to the main body 132 and is located above the rotation platform 120. The positioning component 136 is movably connected to the main body 132 and is configured to position the lock assembly 134.

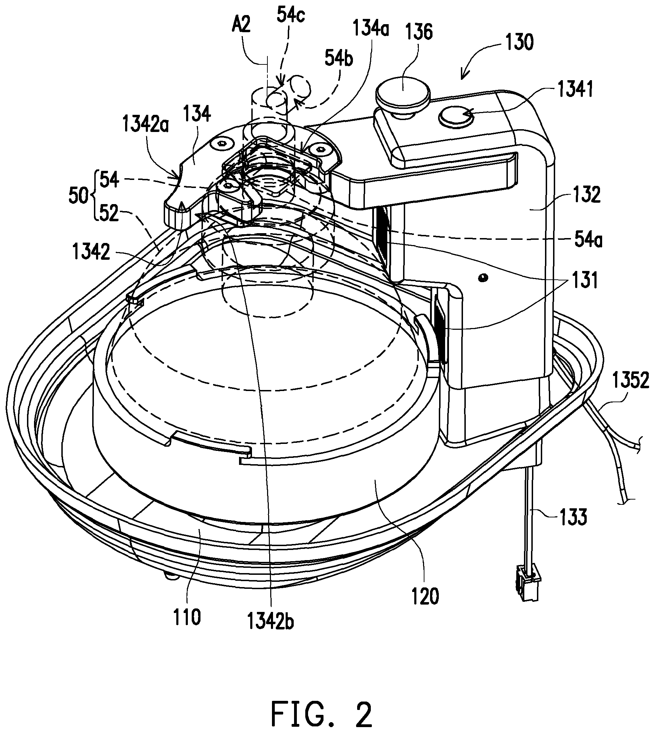

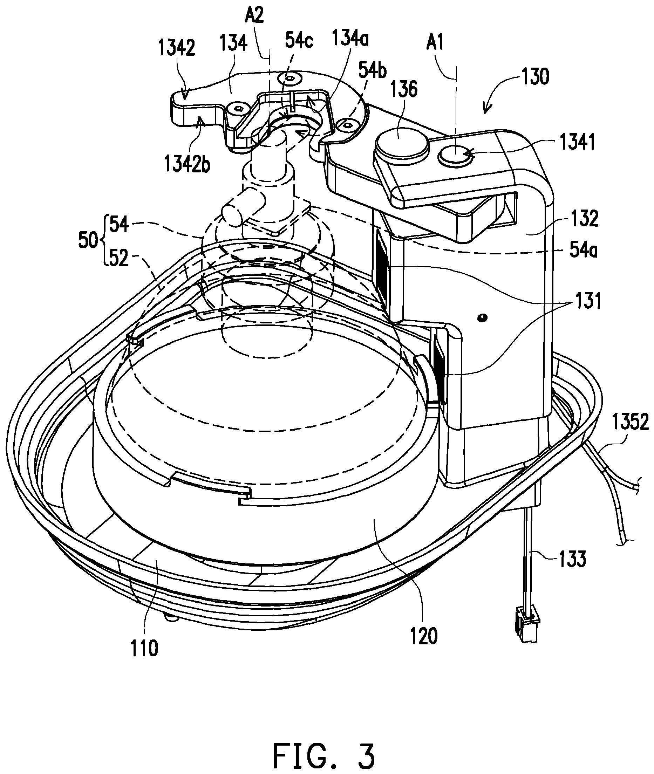

FIG. 2 illustrates a lock assembly of FIG. 1 locking a stator of a centrifugal bowl. FIG. 3 illustrates the lock assembly of FIG. 1 separated from the stator of the centrifugal bowl. Specifically, the rotation platform 120 may support a rotor 52 of a centrifugal bowl 50 as shown in FIG. 2 and FIG. 3. The rotor 52 is rotatably connected to a stator 54 of the centrifugal bowl 50. The rotor 52 is configured to accommodate liquid (such as blood or other specimens) to be centrifuged. The lock assembly 134 may be operated to a first state shown in FIG. 2 relative to the main body 132 to lock the stator 54, and the positioning component 136 may move to a first position shown in FIG. 2 relative to the main body 132 to position the lock assembly 134 to the first state. At this time, the centrifugal bowl 50 is locked onto the rotation platform 120 by the lock module 130. The rotor 52 may perform a centrifugation step as the rotation platform 120 rotates. After the centrifugation step is completed, the positioning component 136 may move to a second position shown in FIG. 3 relative to the main body 132 to release the lock assembly 134, so that the lock assembly 134 may be operated to a second state shown in FIG. 3 relative to the main body 132 to be separated from the stator 54, so that the user can remove the centrifugal bowl 50 from the centrifuge device 100.

As described above, the lock module 130 of this embodiment locks the stator 54 of the centrifugal bowl 50 by the operation of the single lock assembly 134, and positions and releases the lock assembly 134 by the operation of the single positioning component 136. Also, the lock assembly 134 and the positioning component 136 are disposed in the same main body 132 of the lock module 130, so the user may conveniently perform the operations of the lock assembly 134 and the positioning component 136 with one hand. In addition, since the lock module 130 of this embodiment is a single module composed of simple parts as described above, the required configuration space is relatively small, so that the overall volume of the centrifuge device 100 can be effectively reduced.

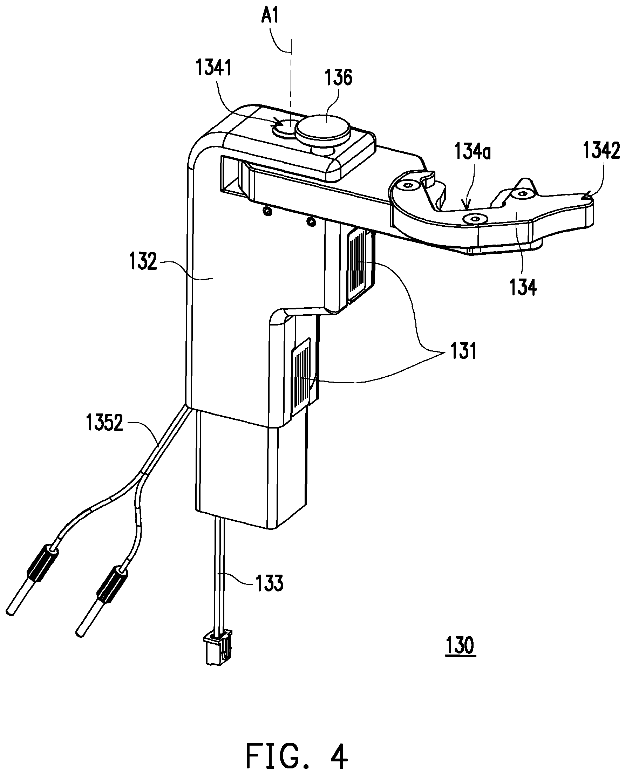

FIG. 4 is a perspective view of a lock module of FIG. 1. Please refer to FIG. 2 and FIG. 4. In detail, the lock assembly 134 of this embodiment has a notch 134a. An inner edge of the notch 134a is non-circular. The stator 54 may have a locked portion 54a whose shape corresponds to the inner edge of the notch 134a. Therefore, the lock assembly 134 may lock the stator 54 by the notch 134a to truly stop the stator 54 from rotating. In other embodiments, the lock assembly 134 may stop the stator 54 from rotating by other suitable structures, which is not limited in the disclosure.

In addition, the lock assembly 134 of this embodiment has a pivot portion 1341 and a force receiving portion 1342. The pivot portion 1341 and the force receiving portion 1342 are respectively located at two opposite ends of the lock assembly. The pivot portion 1341 is pivotally connected to the main body 132 along a first rotational axis A1, the rotation platform 120 is adapted to rotate along a second rotational axis A2, and the first rotational axis A1 is parallel to the second rotational axis A2. The force receiving portion 1342 is adapted to receive a force, so that the lock assembly 134 rotates between the first state shown in FIG. 2 and the second state shown in FIG. 3 relative to the main body 132 along the first rotational axis A1.

For example, the user may press the thumb of the left hand against a force exertion position 54b of the stator 54 in FIG. 3, press the remaining fingers (such as the middle finger or ring finger) of the left hand against a force exertion position 1342a of the force receiving portion 1342, and exert a force to the stator 54 and the lock assembly 134 accordingly, so that the lock assembly 134 rotates from the second state shown in FIG. 3 to the first state shown in FIG. 2 along the first rotational axis A1. At this time, the notch 134a of the lock assembly 134 is combined with the locked portion 54a of the stator 54 to complete the locking of the stator 54.

Conversely, the user may press the thumb of the left hand against another force exertion position 1342b of the force receiving portion 1342 in FIG. 2 and press the index finger of the left hand against another force exertion position 54c of the stator 54 while using the middle finger of the left hand to press the positioning component 136 from the first position shown in FIG. 2 to the second position shown in FIG. 3 to release the lock assembly 134, and exert a force to the stator 54 and the lock assembly 134 accordingly, so that the lock assembly 134 is rotates from the first state shown in FIG. 2 to the second state shown in FIG. 3 along the first rotational axis A1. At this time, the notch 134a of the lock assembly 134 is detached from the locked portion 54a of the stator 54 to complete the release of the stator 54.

The above force exertion manner is only an example, and the user may apply force to the lock assembly 134 and the stator 54 with other manners to rotate the lock assembly 134, which is not limited in the disclosure.

The configuration and operation of the positioning component 136 of this embodiment will be described in detail below.

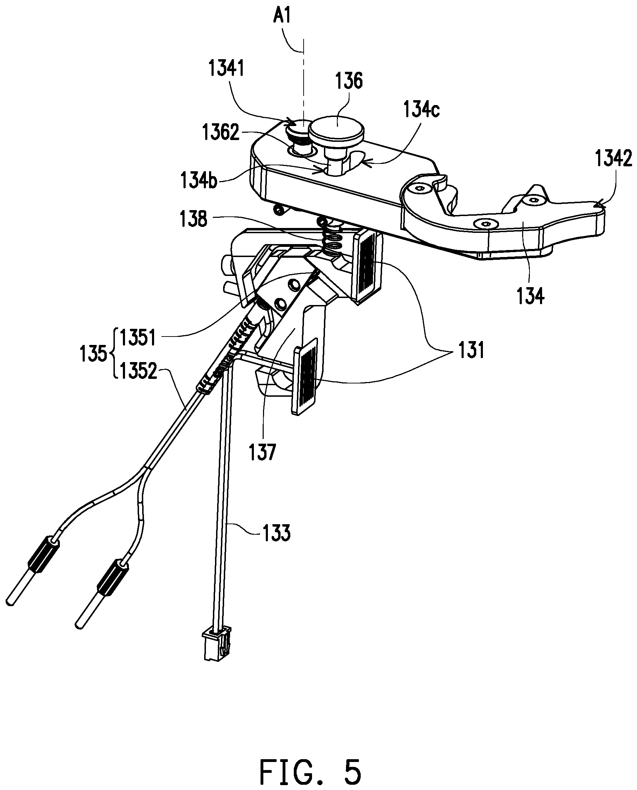

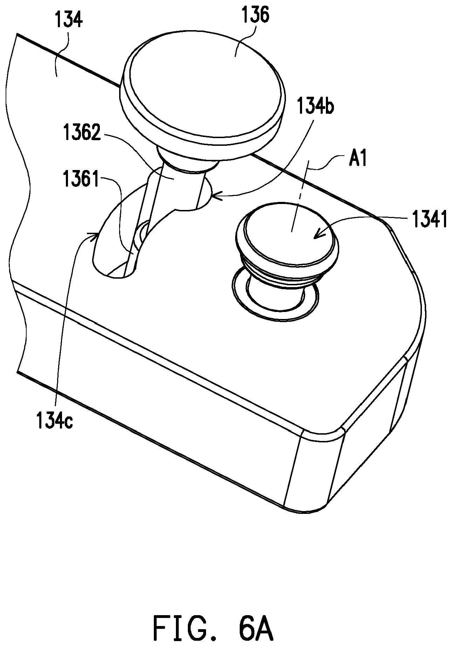

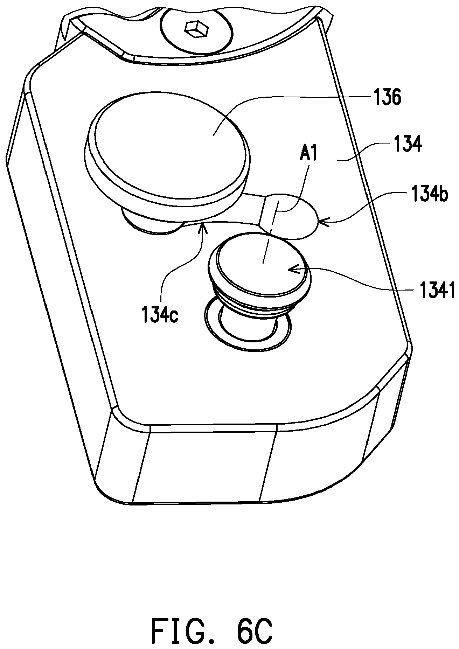

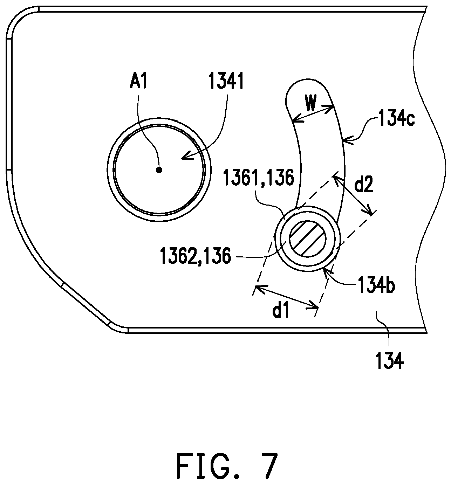

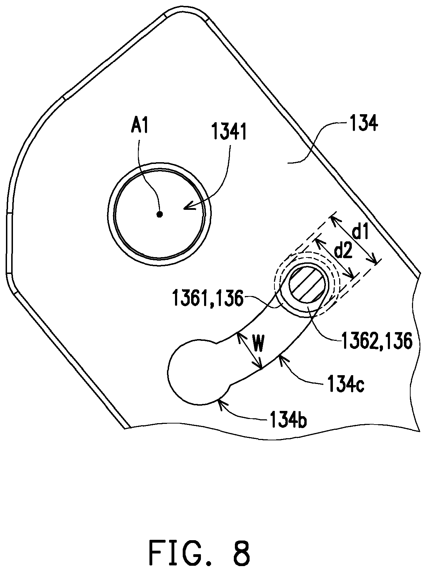

FIG. 5 is a perspective view of a partial structure of the lock module of FIG. 4. FIG. 6A to FIG. 6C illustrate an operation process of a positioning component of FIG. 5. FIG. 7 is a top view of a partial structure of the positioning component and the lock assembly of FIG. 6A. FIG. 8 is a top view of the partial structure of the positioning component and the lock assembly of FIG. 6C. Please refer to FIG. 5 to FIG. 8, the lock assembly 134 of this embodiment has a positioning hole 134b and a sliding groove 134c connected to each other. The positioning component 136 includes a positioning section 1361 and a non-positioning section 1362. An outer diameter d1 (labeled in FIG. 7 and FIG. 8) of the positioning section 1361 is greater than a width W (labeled in FIG. 7 and FIG. 8) of the sliding groove 134c, and an outer diameter d2 (labeled in FIG. 7 and FIG. 8) of the non-positioning section 1362 is less than the width W of the sliding groove 134c. The lock module 130 further includes an elastic component 138 as shown in FIG. 5. The elastic component 138 is, for example, a spring and is connected between the main body 132 (shown in FIG. 4) and the positioning component 136.

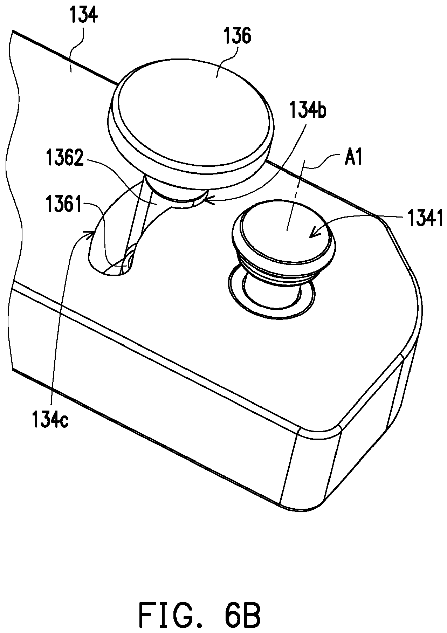

In addition, when the lock assembly 134 is in the first state and the positioning component 136 is located at the first position as shown in FIG. 6A, the positioning component 136 penetrates the positioning hole 134b of the lock assembly 134 and at least part of the positioning section 1361 is located in the positioning hole 134b as shown in FIG. 6A. At this time, the positioning component 136 is maintained at the first position by the elastic force of the elastic component 138, and the positioning section 1361 is limited in the positioning hole 134b of the lock assembly 134 due to the larger outer diameter d1 to achieve the effect of positioning the lock assembly 134. When the positioning component 136 is pressed by the user to resist the elastic force of the elastic component 138 and move from the first position shown in FIG. 6A to the second position shown in FIG. 6B along an axial direction of the positioning hole 134b for the positioning section 1361 to completely move apart from the positioning hole 134b, the non-positioning section 1362 located in the positioning hole 134b may move to the sliding groove 134c relative to the lock assembly 134 due to the smaller outer diameter d2. That is, the lock assembly 134 is no longer positioned by the positioning component 136 and may rotate to the second state shown in FIG. 6C relative to the positioning component 136 along the first rotational axis A1. When the lock assembly 134 rotates from the second state shown in FIG. 6C to the first state shown in FIG. 6B, the positioning component 136 returns from the second position shown in FIG. 6B to the first position shown in FIG. 6A by the elastic force of the elastic component 138 to position the lock assembly 134.

In other embodiments, the positioning component 136 may operate and position/release the lock assembly 134 by other suitable manners, which is not limited in the disclosure.

Please refer to FIG. 2 and FIG. 4. In this embodiment, the lock module 130 includes at least one leakage sensor 131 (shown as two). The leakage sensor 131 is disposed in the main body 132 and faces the rotation platform 120 on the centrifugal bowl 50. The leakage sensor 131 is configured to sense whether the centrifugal bowl 50 is leaking, and the two leakage sensors 131 are respectively disposed at different heights to respectively sense different positions where the centrifugal bowl 50 may leak. Furthermore, the lock module 130 further includes at least one signal line 133. The signal line 133 is partially disposed in the main body 132 and is connected to the leakage sensor 131. The leakage sensor 131 may be electrically connected to a signal receiving/processing element in the base 110 (shown in FIG. 1) of the centrifuge device 100 through the signal line 133.

In addition, the lock module 130 includes an optical sensing assembly 135. The optical sensing assembly 135 is disposed in the main body 132 and is adapted to sense a liquid level of liquid in the centrifugal bowl 50 on the rotation platform 120. The liquid level is, for example, an interface between plasma and red blood cells in blood, an interface between the blood and air thereon, etc. Specifically, the optical sensing assembly 135 may include a lens 1351 and an optical fiber line 1352. The lens 1351 is disposed in the main body 132 and faces the centrifugal bowl 50 on the rotation platform 120, and the optical fiber line 1352 is partially disposed in the main body 132 and is connected to the lens 1351 to transmit a light signal from the lens 1351 to the signal receiving/processing element in the base 110 (shown in FIG. 1) of the centrifuge device 100.

Integrating the leakage sensor 131, the signal line 133, the lens 1351, and the optical fiber line 1352 into the main body 132 of the lock module 130 as described above may further simplify the structure of the centrifuge device 100 and facilitate the reduction of the overall volume of the centrifuge device 100. In addition, the leakage sensor 131, the signal line 133, the lens 1351, and the optical fiber line 1352 are integrated in an integration housing 137 shown in FIG. 5 in advance and are equipped to the main body 132 of the lock module 130, and are then assembled together to the base 110 of the centrifuge device 100, which may simplify the assembly process and prevent the accumulation of excessive assembly errors due to the separate assembly of various parts.

In summary, the lock module of the disclosure locks the stator of the centrifugal bowl by the operation of the single lock assembly, and positions and releases the lock assembly by the operation of the single positioning component, and the lock assembly and the positioning component are disposed in the same main body, so the user may easily operate the lock assembly and the positioning component with one hand. In addition, since the lock module of the disclosure is a single module composed of the simple parts as described above, the required configuration space is relatively small, so that the overall volume of the centrifuge device may be effectively reduced. Moreover, the leakage sensor and the optical sensing assembly may be integrated into the lock module to further simplify the structure and the assembly process of the centrifuge device.

## Claims

1. A lock module (130), adapted to a centrifuge device (100), wherein the centrifuge device (100) comprises a base (110) and a rotation platform (120), the rotation platform (120) is disposed on the base (110) and is adapted to support a rotor (52) of a centrifugal bowl (50), and the rotor (52) is rotatably connected to a stator (54) of the centrifugal bowl (50), the lock module (130) comprising:
a main body (132), disposed on the base (110);
a lock assembly (134), movably connected to the main body (132) and located above a rotation platform (120) of the centrifuge device (100), wherein the lock assembly (134) is adapted to be operated to a first state relative to the main body (132) to position the stator (54), and the lock assembly (134) is adapted to be operated to a second state relative to the main body (132) to be separated from the stator (54); and
a positioning component (136), movably connected to the main body (132), wherein the positioning component (136) is adapted to move to a first position relative to the main body (132) to position the lock assembly (134) to the first state, and the positioning component (136) is adapted to move to a second position relative to the main body (132) to release the lock assembly (134),
wherein the lock module (130) is **characterized in that**:
the lock assembly (134) has a positioning hole (134b) and a sliding groove (134c) connected to each other, the positioning component (136) comprises a positioning section (1361) and a non-positioning section (1362), an outer diameter (d1, d2) of the positioning section (1361) is greater than a width (W) of the sliding groove (134c), and an outer diameter (d1, d2) of the non-positioning section (1362) is less than the width (W) of the sliding groove (134c),
when the lock assembly (134) is in the first state and the positioning component (136) is located at the first position, the positioning component (136) penetrates the positioning hole (134b) and at least part of the positioning section (1361) is located in the positioning hole (134b) to position the lock assembly (134), and
when the positioning component (136) moves to the second position along an axial direction of the positioning hole (134b) for the positioning section (1361) to move apart from the positioning hole (134b), the non-positioning section (1362) located in the positioning hole (134b) is adapted to move to the sliding groove (134c) relative to the lock assembly (134).

2. The lock module (130) according to claim 1, wherein the lock assembly (134) has a notch (134a) and is adapted to lock the stator (54) by the notch (134a), an inner edge of the notch (134a) is non-circular, the lock assembly (134) has a pivot portion (1341) and a force receiving portion (1342), the pivot portion (1341) and the force receiving portion (1342) are respectively located at two opposite ends of the lock assembly (134), the pivot portion (1341) is pivotally connected to the main body (132), and the force receiving portion (1342) is adapted to receive a force, so that the lock assembly (134) rotates between the first state and the second state relative to the main body (132).

3. The lock module (130) according to claim 1, wherein the lock assembly (134) is pivotally connected to the main body (132) along a first rotational axis (A1), the rotation platform (120) is adapted to rotate along a second rotational axis (A2), and the first rotational axis (A1) is parallel to the second rotational axis (A2).

4. The lock module (130) according to claim 1, comprising an elastic component (138), wherein the elastic component (138) is connected between the main body (132) and the positioning component (136), the positioning component (136) is adapted to resist an elastic force of the elastic component (138) to move from the first position to the second position, and the positioning component (136) is adapted to return from the second position to the first position by the elastic force of the elastic component (138).

5. The lock module (130) according to claim 1, comprising at least one leakage sensor (131) and at least one signal line (133), wherein the at least one leakage sensor (131) is disposed in the main body (132) and faces the centrifugal bowl (50) on the rotation platform (120), and the at least one signal line (133) is at least partially disposed in the main body (132) and is connected to the at least one leakage sensor (131).

6. The lock module (130) according to claim 1, comprising an optical sensing assembly (135), wherein the optical sensing assembly (135) is disposed in the main body (132) and is adapted to sense a liquid level of liquid in the centrifugal bowl (50) on the rotation platform (120), the optical sensing assembly (135) comprises a lens (1351) and an optical fiber line (1352), the lens (1351) is disposed in the main body (132) and faces the centrifugal bowl (50) on the rotation platform (120), and the optical fiber line (1352) is at least partially disposed in the main body (132) and is connected to the lens (1351).

## Patentansprüche

1. Verriegelungsmodul (130), das an eine Zentrifugenvorrichtung (100) angepasst ist, wobei die Zentrifugenvorrichtung (100) eine Basis (110) und eine Drehplattform (120) umfasst, wobei die Drehplattform (120) auf der Basis (110) angeordnet ist und angepasst ist, um einen Rotor (52) einer Zentrifugentrommel (50) zu tragen, und wobei der Rotor (52) drehbar mit einem Stator (54) der Zentrifugentrommel (50) verbunden ist, wobei das Verriegelungsmodul (130) umfasst:
einen Hauptkörper (132), der auf der Basis (110) angeordnet ist;
eine Verriegelungsbaugruppe (134), die beweglich mit dem Hauptkörper (132) verbunden ist und sich oberhalb einer Drehplattform (120) der Zentrifugenvorrichtung (100) befindet, wobei die Verriegelungsbaugruppe (134) angepasst ist, um in einem ersten Zustand relativ zu dem Hauptkörper (132) betätigt werden zu können, um den Stator (54) zu positionieren, und die Verriegelungsbaugruppe (134) angepasst ist, um in einem zweiten Zustand relativ zu dem Hauptkörper (132) betätigt werden zu können, um von dem Stator (54) getrennt zu werden; und
ein Positionierungsbauteil (136), das beweglich mit dem Hauptkörper (132) verbunden ist, wobei das Positionierungsbauteil (136) angepasst ist, um sich in eine erste Position relativ zu dem Hauptkörper (132) zu bewegen, um die Verriegelungsbaugruppe (134) in den ersten Zustand zu positionieren, und das Positionierungsbauteil (136) angepasst ist, sich in eine zweite Position relativ zu dem Hauptkörper (132) zu bewegen, um die Verriegelungsbaugruppe (134) zu lösen,
wobei das Verriegelungsmodul (130) **dadurch gekennzeichnet ist, dass**:
die Verriegelungsbaugruppe (134) ein Positionierungsloch (134b) und eine Gleitrille (134c) aufweist, die miteinander verbunden sind, das Positionierungsbauteil (136) einen Positionierungsabschnitt (1361) und einen Nicht-Positionierungsabschnitt (1362) umfasst, ein Außendurchmesser (d1, d2) des Positionierungsabschnitts (1361) größer als eine Breite (W) der Gleitrille (134c) ist, und ein Außendurchmesser (d1, d2) des Nicht-Positionierungsabschnitts (1362) kleiner als die Breite (W) der Gleitrille (134c) ist,
wenn sich die Verriegelungsbaugruppe (134) in dem ersten Zustand befindet und das Positionierungsbauteil (136) sich in der ersten Position befindet, das Positionierungsbauteil (136) in das Positionierungsloch (134b) eindringt und wenigstens ein Teil des Positionierungsabschnitts (1361) sich in dem Positionierungsloch (134b) befindet, um die Verriegelungsbaugruppe (134) zu positionieren, und
wenn sich das Positionierungsbauteil (136) in die zweite Position entlang einer axialen Richtung des Positionierungslochs (134b) bewegt, damit sich der Positionierungsabschnitt (1361) von dem Positionierungsloch (134b) wegbewegt, ist der Nicht-Positionierungsabschnitt (1362), der sich in dem Positionierungsloch (134b) befindet, so angepasst, dass er sich relativ zu der Verriegelungsbaugruppe (134) in die Gleitrille (134c) bewegt.

2. Verriegelungsmodul (130) gemäß Anspruch 1, wobei die Verriegelungsbaugruppe (134) eine Kerbe (134a) aufweist und angepasst ist, den Stator (54) durch die Kerbe (134a) zu verriegeln, eine Innenkante der Kerbe (134a) nicht kreisförmig ist, die Verriegelungsbaugruppe (134) einen Schwenkabschnitt (1341) und einen Kraftaufnahmeabschnitt (1342) aufweist, der Schwenkabschnitt (1341) und der Kraftaufnahmeabschnitt (1342) sich jeweils an zwei gegenüberliegenden Enden der Verriegelungsbaugruppe (134) befinden, der Schwenkabschnitt (1341) schwenkbar mit dem Hauptkörper (132) verbunden ist, und der Kraftaufnahmeabschnitt (1342) angepasst ist, eine Kraft aufzunehmen, so dass sich die Verriegelungsbaugruppe (134) zwischen dem ersten Zustand und dem zweiten Zustand relativ zu dem Hauptkörper (132) dreht.

3. Verriegelungsmodul (130) gemäß Anspruch 1, wobei die Verriegelungsbaugruppe (134) schwenkbar mit dem Hauptkörper (132) entlang einer ersten Drehachse (A1) verbunden ist, die Drehplattform (120) so angepasst ist, dass sie sich entlang einer zweiten Drehachse (A2) dreht, und die erste Drehachse (A1) parallel zu der zweiten Drehachse (A2) ist.

4. Verriegelungsmodul (130) gemäß Anspruch 1, umfassend ein elastisches Bauteil (138), wobei das elastische Bauteil (138) zwischen dem Hauptkörper (132) und dem Positionierungsbauteil (136) verbunden ist, das Positionierungsbauteil (136) angepasst ist, um einer elastischen Kraft des elastischen Bauteils (138) zu widerstehen, um sich von der ersten Position in die zweite Position zu bewegen, und das Positionierungsbauteil (136) angepasst ist, um von der zweiten Position in die erste Position durch die elastische Kraft des elastischen Bauteils (138) zurückzukehren.

5. Verriegelungsmodul (130) gemäß Anspruch 1, umfassend mindestens einen Leckagesensor (131) und mindestens eine Signalleitung (133), wobei der mindestens eine Leckagesensor (131) in dem Hauptkörper (132) angeordnet ist und der Zentrifugentrommel (50) auf der Drehplattform (120) zugewandt ist, und die wenigstens eine Signalleitung (133) wenigstens teilweise in dem Hauptkörper (132) angeordnet und mit dem mindestens einen Leckagesensor (131) verbunden ist.

6. Verriegelungsmodul (130) gemäß Anspruch 1, umfassend eine optische Erfassungsbaugruppe (135), wobei die optische Erfassungsbaugruppe (135) in dem Hauptkörper (132) angeordnet ist und geeignet ist, einen Flüssigkeitspegel von Flüssigkeit in der Zentrifugentrommel (50) auf der Drehplattform (120) zu erfassen, die optische Erfassungsanordnung (135) eine Linse (1351) und eine optische Faserleitung (1352) umfasst, die Linse (1351) in dem Hauptkörper (132) angeordnet ist und der Zentrifugentrommel (50) auf der Drehplattform (120) zugewandt ist, und die optische Faserleitung (1352) wenigstens teilweise in dem Hauptkörper (132) angeordnet ist und mit der Linse (1351) verbunden ist.

## Revendications

1. Module de verrouillage (130), adapté sur un dispositif de centrifugeuse (100), dans lequel le dispositif de centrifugeuse (100) comprend une base (110) et une plateforme de rotation (120), la plateforme de rotation (120) est disposée sur la base (110) et est adaptée pour supporter un rotor (52) d'une cuve de centrifugeuse (50), et le rotor (52) est connecté en rotation sur un stator (54) de la cuve de centrifugeuse (50), le module de verrouillage (130) comprenant :
un corps principal (132), disposé sur la base (110) ; un ensemble de verrouillage (134), relié de manière mobile au corps principal (132) et situé au-dessus d'une plateforme de rotation (120) du dispositif de centrifugeuse (100), dans lequel l'ensemble de verrouillage (134) est adapté pour être actionné vers un premier état par rapport au corps principal (132) pour positionner le stator (54) et l'ensemble de verrouillage (134) est adapté pour être actionné vers un second état par rapport au corps principal (132) pour être séparé du stator (54) ; et
un composant de positionnement (136), connecté de manière mobile au corps principal (132), dans lequel le composant de positionnement (136) est adapté pour se déplacer vers une première position par rapport au corps principal (132) pour positionner l'ensemble de verrouillage (134) dans le premier état, et le composant de positionnement (136) est adapté pour se déplacer vers une seconde position par rapport au corps principal (132) pour libérer l'ensemble de verrouillage (134), dans lequel le module de verrouillage (130) est **caractérisé en ce que** :
l'ensemble de verrouillage (134) présente un trou de positionnement (134b) et une rainure coulissante (134c) reliés l'un à l'autre, le composant de positionnement (136) comprend une section de positionnement (1361) et une section de non-positionnement (1362), un diamètre extérieur (d1, d2) de la section de positionnement (1361) est plus grand qu'une largeur (W) de la rainure coulissante (134c), et un diamètre extérieur (d1, d2) de la section de non-positionnement (1362) est plus petit que la largeur (W) de la rainure coulissante (134c),
lorsque l'ensemble de verrouillage (134) est dans le premier état et le composant de positionnement (136) est situé à la première position, le composant de positionnement (136) pénètre le trou de positionnement (134b) et au moins une partie de la section de positionnement (1361) est située dans le trou de positionnement (134b) pour positionner l'ensemble de verrouillage (134), et
lorsque le composant de positionnement (136) se déplace vers la seconde position le long d'une direction axiale du trou de positionnement (134b) pour que la section de positionnement (1361) s'éloigne du trou de positionnement (134b), la section de non-positionnement (1362) située dans le trou de positionnement (134b) est adaptée pour se déplacer vers la rainure coulissante (134c) par rapport à l'ensemble de verrouillage (134).

2. Module de verrouillage (130) selon la revendication 1, dans lequel l'ensemble de verrouillage (134) présente une encoche (134a) et est adapté pour verrouiller le stator (54) par l'encoche (134a), un bord intérieur de l'encoche (134a) est non-circulaire, l'ensemble de verrouillage (134) présente une partie de pivot (1341) et une partie de réception de force (1342), la partie de pivot (1341) et la partie de réception de force (1342) sont situées respectivement sur deux extrémités opposées de l'ensemble de verrouillage (134), la partie de pivot (1341) est connectée de manière pivotante au corps principal (132), et la partie de réception de force (1342) est adaptée pour recevoir une force de façon à ce que l'ensemble de verrouillage (134) tourne entre le premier état et le second état par rapport au corps principal (132).

3. Module de verrouillage (130) selon la revendication 1, dans lequel l'ensemble de verrouillage (134) est connecté pivotant au corps principal (132) le long d'un premier axe de rotation (A1), la plateforme de rotation (120) est adaptée pour tourner le long d'un second axe de rotation (A2), et le premier axe de rotation (A1) est parallèle au second axe de rotation (A2).

4. Module de verrouillage (130) selon la revendication 1, comprenant un composant élastique (138), dans lequel le composant élastique (138) est connecté entre le corps principal (132) et le composant de positionnement (136), le composant de positionnement (136) est adapté pour résister à une force élastique du composant élastique (138) pour se déplacer de la première position à la seconde position, et le composant de positionnement (136) est adapté pour retourner de la seconde position à la première position par la force élastique du composant élastique (138).

5. Module de verrouillage (130) selon la revendication 1, comprenant au moins un capteur de fuites (131) et au moins une ligne de signal (133), dans lequel l'au moins un capteur de fuite (131) est disposé dans le corps principal (132) et est face à la cuve de centrifugeuse (50) sur la plateforme de rotation (120), et l'au moins une ligne de signal (133) est au moins partiellement disposée dans le corps principal (132) et est connectée à l'au moins un capteur de fuites (131).

6. Module de verrouillage (130) selon la revendication 1, comprenant un ensemble de détection optique (135), dans lequel l'ensemble de détection optique (135) est disposé dans le corps principal (132) et est adapté pour détecter un niveau de liquide dans la cuvette de centrifugeuse (50) sur la plateforme de rotation (120), l'ensemble de détection optique (135) comprend une lentille (1351) et une ligne de fibres optiques (1352), la lentille (1351) est disposée dans le corps principal (132) et est face à la cuve de centrifugeuse (50) sur la plateforme de rotation (120), et la ligne de fibres optiques (1352) est au moins partiellement disposée dans le corps principal (132) et est connectée à la lentille (1351).
